# EUROPÄISCHE PATENTANMELDUNG

(11) **EP 1 351 410 A1**
(43) Veröffentlichungstag der Anmeldung: **08.10.2003**
(21) Anmeldenummer: 03450073.6
(22) Anmeldetag: 24.03.2003
(51) Int. Cl.: H04B 5/00

(54) **Trassengebundenes Datenübertragungssystem**

(30) Priorität: 22.03.2002 AT 4542002
(71) Anmelder: Siemens AG Österreich, 1210 Wien (AT)
(72) Erfinder: Asperger, Karl, 1050 Wien (AT); Faltin, Leopold, 1160 Wien (AT); Hofer, Jürgen, 1220 Wien (AT); Jatschka, Thomas, 2111 Harmannsdorf (DE); Pohl, Alfred, 2130 Mistelbach (AT); Rohrer, Martin, 1100 Wien (AT)
(74) Vertreter: Matschnig, Franz, Dipl.-Ing.

(57) **Zusammenfassung**

Ein trassengebundenes Datenübertragungssystem mit zumindest zwei Funk-Basisstationen (BA1, ... , BA3), sowie mit zumindest einem, im Bereich einer Trasse bewegbaren mobilen Terminal (MOT), wobei längs der Trasse (TRA) ein einziger, durchgehender Leckwellenleiter (LWL) vorgesehen ist, jede Basisstation (BA1, ... , BA3) über einen Koppler (BDK) an den Leckwellenleiter gekoppelt ist, das zumindest eine mobile Terminal (MOT) zwei, mittels zumindest einer Antenne (ANT) an das Leckwellenkabel gekoppelte Sende/Empfangseinheiten (RFA, RFB) besitzt, jeder Sende/Empfangseinheit ein eigener Sende/Empfangskanal zuweisbar ist und ein Steuerrechner (STR) des mobilen Terminals (MOT) zum Ermitteln einer mit der Empfangs-Feldstärke (E) korrelierten Kenngröße für jede der beiden Sende/Empfangseinheiten eingerichtet ist, sowie dazu, während der Bewegung des Terminals (MOT) längs der Trasse bei bestehender Verbindung auf einem Kanal und bei Annäherung an eine neue Basisstation und entsprechender Zunahme der Kerngröße eines anderen Kanals und Überschreiten eines festlegbaren Minimalwertes (Eₘᵢₙ) für diese Kerngröße die Verbindung auch auf dem anderen Kanal einzubuchen und sodann die Datenübertragung über diesen anderen Kanal durchzuführen.

## Beschreibung

Die Erfindung bezieht sich auf ein trassengebundenes Datenübertragungssystem mit zumindest zwei Funk-Basisstationen, welche mit einem zentralen Server in Verbindung stehen und die an einen längs einer Trasse angeordneten Leckwellenleiter angeschlossen sind, sowie mit zumindest einem, im Bereich der Trasse bewegbaren mobilen Terminal, das zumindest eine Sende/Empfangseinheit mit einem Steuerrechner und mit zumindest einer Antenne besitzt.

Systeme dieser Art gelangen überall dort zur Anwendung, wo Daten von und zu beweglichen Terminals übertragen werden sollen, die sich längs bestimmter Trassen bewegen. Dabei kann es sich beispielsweise um Transportwagen in Lagerhaltungssystemen, Robotersystemen, Wagen von Einrichtungen zur Personenbeförderung, Züge, etc. handeln. Die bewegbaren Terminals sind mit ihren Sende/Empfangseinheiten hochfrequenzmäßig mit Hilfe von Leckwellenleitern an Funk-Basisstationen angebunden.

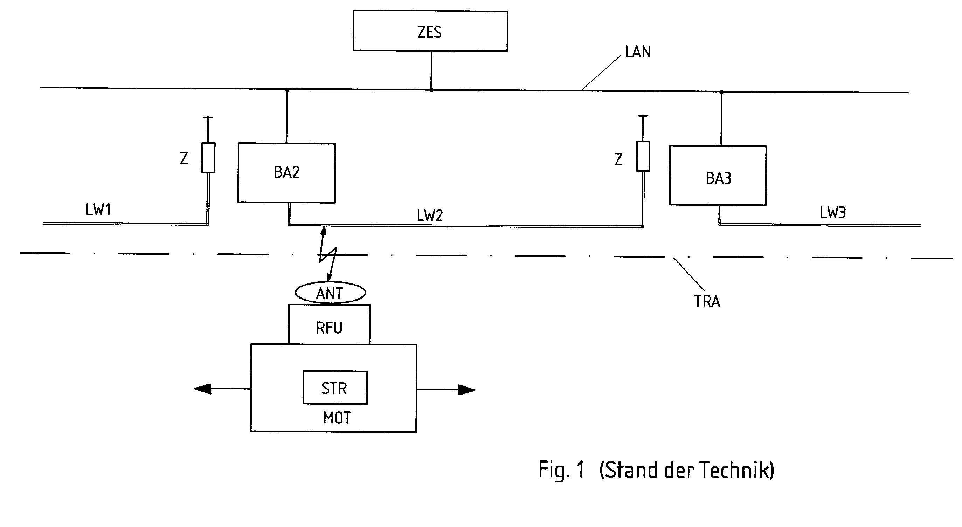

Fig. 1 zeigt schematisch ein trassengebundenes Datenübertragungssystem nach dem Stand der Technik.

Längs einer Trasse TRA, realisiert z. B. durch Schienen, eine Fahrbahn, ein Seil oder dergleichen soll sich ein mobiles Terminal MOT, z. B. ein Wagen zur Aufnahme oder zum Ergreifen von Ersatzteilen in einem Lager, bewegen, wobei im allgemeinen mehrere solche Terminals eingesetzt werden.

Das mobile Terminal MOT besitzt einen Steuerrechner STR, eine Sende/Empfangseinheit RFU und eine Antenne ANT, daneben aber noch spezifische, hier nicht dargestellte Einheiten, wie Sensoren, Greifer, Laufantriebe etc. Um Daten, z. B. Steuerbefehle, von einer zentralen Steuerung ZES des Systems an das Terminal MOT zu übertragen bzw. um von dem Terminal MOT Messdaten, Rückmeldungen usw. an den zentralen Server ZES drahtlos zu übertragen, wird ein Funkverkehr über geringe Distanz mit Hilfe von Leckwellenleitern gewählt. Dabei sind längs der Trasse TRA mehrere Abschnitte vorgesehen, die jeweils Leckwellenleiterabschnitte LW1, LW2, LW3 besitzen, welche an Basisstationen BA1 (nicht gezeigt), BA2, BA3 angeschlossen sind. Die Basisstationen BA1, BA2, BA3 stehen ihrerseits über ein lokales Netz LAN, einen Bus oder dergleichen mit dem zentralen Server ZES in Verbindung.

Leckwellenleiter sind Hochfrequenzleiter, die hier an einem Ende an einer Basisstation eingespeist werden und an dem anderen Ende zweckmäßigerweise mit einem Widerstand Z reflexionsfrei abgeschlossen sind, wobei über ihre gesamte Länge möglichst längshomogen HF-Energie abgestrahlt wird. Es kann sich dabei im klassischen Sinn um Hohlleiter mit Schlitzen handeln oder um besonders bearbeitete Koaxialkabel, die über ihre gesamte Länge "lecken". Prinzipiell sind natürlich auch andere Leistungskonfigurationen möglich und im Rahmen der Erfindung sind "Leckwellenleiter" auch in diesem allgemeinsten Sinn zu verstehen. Im Gegensatz zu freistrahlenden Antennen ist bei Anwendung von Leckwellenleitern die Gefahr von Übertragungsproblemen durch Reflexionen, Interferenzen etc. praktisch ausgeschlossen und damit eine hohe Sicherheit und Stabilität der Übertragungswege gegeben.

Als Funksysteme kommen digitale Funksysteme, wie z. B. TDMA-Systeme, WLAN und Bluetooth in Frage. Voraussetzung ist auch die Verfügbarkeit mehrerer Kanäle, was z. B. bei Bluetooth, das im 2,4 GHz ISM-Band arbeitet, gegeben ist. Der physikalische Kanal ist dabei durch eine Pseudorandom Hoppingsequenz über beispielsweise 79 HF-Kanäle gegeben. Die Anzahl der logischen Kanäle, sie entsprechen in Zeitabschnitte unterteilten Hoppingsequenzen, ist dabei durch die mit der Kanalanzahl steigende Kollisionswahrscheinlichkeit gegeben.

Wenn ein Wagen oder Terminal MOT aus einem Funkversorgungsbereich in einen benachbarten übertritt, z. B. am Ende des Leckwellenleiters LW1 und am Beginn des Leckwellenleiters LW2, können Probleme auftreten, da bei den handelsüblichen Funksystemen eine gewisse Zeit benötigt wird, z. B. bis zu 10 s bei Bluetooth, um eine Verbindung zur Gegenstelle aufzubauen. Ab einer gewissen Grenzgeschwindigkeit der mobilen Terminals MOT besteht somit die Gefahr, dass während des Übertritts aus dem Versorgungsbereich eines Abschnittes (Funkzelle) in einen benachbarten die Verbindung über eine längere Strecke unterbrochen ist und dementsprechend Daten verloren gehen, Betriebsunterbrechungen auftreten etc. Während des Übertritts von einem Abschnitt in einen benachbarten muss sich nämlich das mobile Terminal MOT von einer Basisstation BA1, ..., BA3 abmelden und bei der neuen anmelden (einbuchen).

Eine Aufgabe der Erfindung besteht darin, dem obgenannten Problem entgegenzutreten, d. h. auch bei Verwendung nicht-proprietärer standardisierter Funksysteme, wie z. B. WLAN oder Bluetooth, bei welchen der Vorgang des Ab- und Anmeldens vergleichsweise länger dauert, Verbindungsunterbrechungen und damit möglicherweise Datenverluste mit Sicherheit zu vermeiden.

Diese Aufgabe wird, ausgehend von einem System der eingangs genannten Art, erfindungsgemäß dadurch gelöst, dass
längs der Trasse ein einziger, durchgehender Leckwellenleiter vorgesehen ist,
jede Basisstation über einen Koppler an den Leckwellenleiter gekoppelt ist,
das zumindest eine mobile Terminal zwei, mittels zumindest einer Antenne an das Leckwellenkabel gekoppelte Sende/Empfangseinheiten besitzt,
jeder Sende/Empfangseinheit ein eigener Sende/Empfangskanal zuweisbar ist und der Steuerrechner des mobilen Terminals zum Ermitteln einer mit der Empfangs-Feldstärke korrelierten Kenngröße für jede der beiden Sende/Empfangseinheiten eingerichtet ist, sowie dazu, während der Bewegung des Terminals längs der Trasse bei bestehender Verbindung auf einem Kanal und bei Annäherung an eine neue Basisstation und entsprechender Zunahme der Kerngröße eines anderen Kanals und Überschreiten eines festlegbaren Minimalwertes für diese Kerngröße die Verbindung auch auf dem anderen Kanal einzubuchen und sodann die Datenübertragung über diesen anderen Kanal durchzuführen.

Dank der Erfindung wird bei trassengebundenen Datenübertragungssystemen der betrachteten Art in Bereichen des Wechsels von einem Abschnitt zum nächsten ein "weicher" Handover ermöglicht.

Vorteilhaft und standardisiert realisierbar ist eine Variante, bei welcher jede Basisstation über die Koppler mit gleicher Leistung beidseitig in den Leckwellenleiter einspeist.

In kritischen Fällen kann es beispielsweise aus Sicherheitsgründen angebracht sein, wenn der Steuerrechner dazu eingerichtet ist, während des Handovers über einen bestimmten Übergangsbereich der Trasse zunächst eine parallele Datenübertragung über beide Kanäle aufrecht zu erhalten. Zweckmäßigerweise ist dabei die Länge des Übergangsbereiches von der Geschwindigkeit des mobilen Terminals abhängig gewählt.

Aus Sicherheitsgründen kann vorgesehen sein, dass jede Sende/Empfangseinheit eine eigene Antenne besitzt.

Auch ist es empfehlenswert, wenn der Leckwellenleiter an seinen beiden Enden mit Abschlusswiderständen im wesentlichen reflexionsfrei abgeschlossen ist.

Zweckmäßig ist es weiters, wenn das verwendete Funksystem ein Bluetooth-System ist.

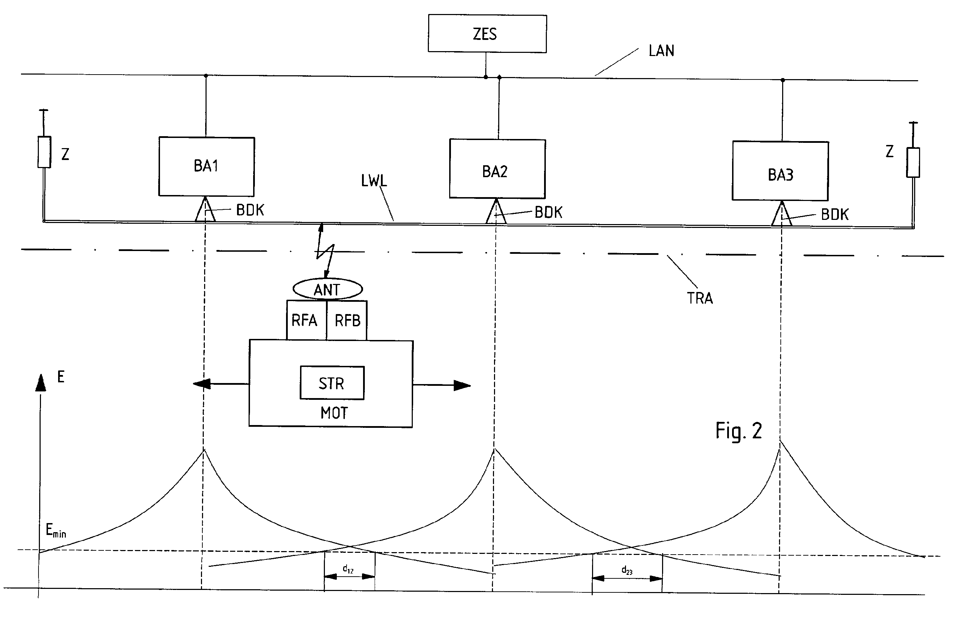

Die Erfindung samt weiteren Vorteilen ist im folgenden an Hand eines Ausführungsbeispiels näher erläutert, welches in der Zeichnung veranschaulicht ist. In dieser zeigen
■ Fig. 1 schematisch ein trassengebundenes Datenübertragungssystem nach dem Stand der Technik und
■ Fig. 2 ein solches Datenübertragungssystem nach der Erfindung.

Fig. 2 zeigt - im Gegensatz zu Fig. 1 - einen einzigen durchgehenden Leckwellenleiter LWL, der an seinen beiden Enden reflexionsfrei durch einen Widerstand Z abgeschlossen ist. Drei Basisstationen BA1, BA2, BA3 speisen ihr HF-Signal in beide Richtungen ein. Dies kann z. B. mit Hilfe von 3dB-Kopplern BDK je mit gleicher Leistung in jede Richtung erfolgen. Derartige Koppler sind dem Fachmann beispielsweise als 90°-Hybrid oder Wilkinson-Koppler bekannt.

Die hier gewählte Einspeisung führt zu einer Verteilung der Feldstärke E längs der Trasse, genauer gesagt im Bereich der Antenne ANT des mobilen Terminals, wie in Fig. 2 unten dargestellt. Denkbar sind auch andere Einspeisungskonfigurationen, beispielsweise auch ein Einspeisen durch je eine Basisstation an den Enden des Leckwellenleiters LWL, mit ein oder mehr dazwischen liegenden, nach beiden Seiten einspeisenden Basisstationen. Die Geometrie der Einspeisung richtet sich nach den jeweiligen Bedürfnissen, wobei ein Leckwellenleiter bei einer typischen Anwendung 20 bis 40 m lang ist und sich die Antenne ANT des mobilen Terminals MOT in einiger cm Entfernung von dem Leckwellenleiter bewegt.

Nach der Erfindung besitzt jedes mobile Terminal MOT weiters zwei Sende/Empfangseinheiten RFA, RFB, welche über eine einzige gemeinsame Antenne ANT an den Leckwellenleiter LWL gekoppelt sind. Nicht zuletzt aus Sicherheitsgründen kann aber auch je eine Antenne für jede der beiden Sende/Empfangseinheiten RFA, RFB vorgesehen sein.

Des weiteren ist jeder Sende/Empfangseinheit RFA, RFB ein eigener Sendekanal, z. B. einer der logischen Kanäle bei Bluetooth, zuweisbar und der Steuerrechner STR kann für jede der beiden Sende/Empfangseinheiten RFA, RFB eine Kenngröße ermitteln, welche mit der Empfangs-Feldstärke E korreliert ist. Dabei kann entweder die Feldstärke E als solche gemessen werden oder ein indirekt mit dieser verknüpfter Wert, wie z. B. die Fehlerhäufigkeit. Besonders eignet sich der bei standardisierten Funksystemen häufig verwendete RSSI-Wert.

Wie unschwer der Fig. 2 entnehmbar, nimmt nun während der Bewegung des mobilen Terminals MOT längs der Trasse TRA die von einer Basisstation stammende Feldstärke E am Ort der Antenne ANT ständig ab, während die von der kommenden Basisstation stammende Feldstärke E zunimmt. Zwischen zwei Basisstationen, hier zwischen BA1 und BA2 bzw. zwischen BA2 und BA3, wird es eine Stelle geben, wo die von zwei Basisstationen herrührenden Feldstärken gleich groß sind. Diese Stelle sollte bei gleichen Sendeleistungen der Basisstationen in der Mitte des jeweiligen Abschnittes liegen.

Es wird nun für die mobilen Terminals MOT bzw. die Sende/Empfangseinheiten RFA, RFB in Verbindung mit dem Steuerrechner STR ein festlegbarer Minimalwert für diese Kenngröße, z. B. ein Minimalwert Eₘᵢₙ der Felstärke E, festgelegt, wobei sich, wie in Fig. 2 ersichtlich, jeweils Übergangsbereiche d₁₂ und d₂₃ zwischen den Basisstationen ergeben, in welchen sowohl die Feldstärke einer Basisstation als auch jene der benachbarten oberhalb dieses Minimalwertes liegt.

Bewegt sich das mobile Terminal MOT beispielsweise von der Einspeisungsstelle der Basisstation BA1 in der Zeichnung nach rechts, so fällt die Feldstärke E oder ein RSSI-Wert von einem Maximum an der Stelle des Kopplers BDK der Station BA1 ab, wogegen die von der nächsten Basisstation BA2 herrührende Feldstärke allmählich zunimmt. Zunächst sei z. B. die Sende/Empfangseinheit RFA des Terminals MOT bei der Basisstation BA1 eingebucht und die Datenverbindung laufe über diese Basisstation. Wenn die Feldstärke E den vorgebbaren Minimalwert Eₘᵢₙ erreicht (oder einen anderen korrelierten Wert), beginnt sich, gesteuert von dem Steuerrechner STR, die Sende/Empfangseinheit RFB auf einem anderen Kanal bei der kommenden Basisstation BA2 einzubuchen. Danach ist die Sende/Empfangseinheit RFA noch bei der Basisstation BA1 eingebucht und die Sende/Empfangseinheit RFB ist - allerdings erst im Stand-by Betrieb - bei der Basisstation BA2 eingebucht. Wenn nun der Feldstärkewert der Station BA1 unter den mehrfach genannten Minimalwert abfällt, wird über den Steuerrechner STR die Funkverbindung umgeschaltet, sodass nun der gesamte Datenverkehr zwischen der Sende/Empfangseinheit RFB und der Basisstation BA2 abläuft. Die Sende/Empfangseinheit RFA kann nun ausbuchen bzw. wird ausgebucht.

Das beschriebene "sanfte" Umbuchen sorgt trotz der Einteilung der Trasse in mehrere Abschnitte für eine Kontinuität des Datenverkehrs.

Bei sicherheitskritischen Anwendungsfällen kann man auch vorsehen, dass in einem Übergangsbereich beide Sende/Empfangseinheiten RFA, RFB nicht nur eingebucht sind, sondern dass vorübergehend auch über beide Einheiten RFA, RFB ein paralleler Datenverkehr läuft. Die damit erreichbare höhere Sicherheit führt allerdings auch zu einem erhöhten Aufwand bei der Steuerung bzw. der Datenauswertung.

Die Länge d₁₂, d₂₃ der Übergangsbereiche wird von der Geschwindigkeit des mobilen Terminals MOT abhängig gewählt, wobei geringere Geschwindigkeiten schmälere Übergangsbereiche erlauben. Es sei hier angemerkt, dass die Darstellung nach Fig. 2 hinsichtlich der Länge der Abschnitte und jener der Übergangsbereiche nicht maßstäblich ist.

Die Erfindung bietet auch noch den zusätzlichen Vorteil, dass bei einem Ausfall einer der beiden Sende/Empfangseinheiten RFA oder RFB noch immer ein Notbetrieb über die intakte Sende/Empfangseinheit aufrechterhalten werden kann, wobei in diesem Fall zweckmäßigerweise die Geschwindigkeit des mobilen Terminals MOT reduziert wird, damit während des Umbuchens der nunmehr einzigen Sende/Empfangseinheit in den Übergangsbereichen der Datenverkehr so wenig wie möglich gestört wird.

## Patentansprüche

1. Trassengebundenes Datenübertragungssystem mit zumindest zwei Funk-Basisstationen (BA1, ... , BA3), welche mit einem zentralen Server (ZES)in Verbindung stehen und die an einen längs einer Trasse (TRA) angeordneten Leckwellenleiter (LW1, ... , LW3) angeschlossen sind, sowie mit zumindest einem, im Bereich der Trasse bewegbaren mobilen Terminal (MOT), das zumindest eine Sende/Empfangseinheit (RFU) mit einem Steuerrechner (STR) und mit zumindest einer Antenne (ANT) besitzt,
**dadurch gekennzeichnet, dass**
längs der Trasse (TRA) ein einziger, durchgehender Leckwellenleiter (LWL) vorgesehen ist,
jede Basisstation (BA1, ... , BA3) über einen Koppler (BDK) an den Leckwellenleiter gekoppelt ist,
das zumindest eine mobile Terminal (MOT) zwei, mittels zumindest einer Antenne (ANT) an das Leckwellenkabel gekoppelte Sende/Empfangseinheiten (RFA, RFB) besitzt,
jeder Sende/Empfangseinheit ein eigener Sende/Empfangskanal zuweisbar ist und der Steuerrechner (STR) des mobilen Terminals (MOT) zum Ermitteln einer mit der Empfangs-Feldstärke (E) korrelierten Kenngröße für jede der beiden Sende/Empfangseinheiten eingerichtet ist, sowie dazu, während der Bewegung des Terminals (MOT) längs der Trasse bei bestehender Verbindung auf einem Kanal und bei Annäherung an eine neue Basisstation und entsprechender Zunahme der Kerngröße eines anderen Kanals und Überschreiten eines festlegbaren Minimalwertes (Eₘᵢₙ) für diese Kerngröße die Verbindung auch auf dem anderen Kanal einzubuchen und sodann die Datenübertragung über diesen anderen Kanal durchzuführen.

2. Datenübertragungssystem nach Anspruch 1, **dadurch gekennzeichnet, dass** jede Basisstation (BA1, ..., BA2) über die Koppler (BDK) mit gleicher Leistung beidseitig in den Leckwellenleiter (LWL) einspeist.

3. Datenübertragungssystem nach Anspruch 1 oder 2, **dadurch gekennzeichnet, dass** der Steuerrechner (SIR) dazu eingerichtet ist, während des Handovers über einen bestimmten Übergangsbereich (d12, d23) der Trasse (TRA) zunächst eine parallele Datenübertragung über beide Kanäle aufrecht zu erhalten.

4. Datenübertragungssystem nach Anspruch 3, **dadurch gekennzeichnet, dass** die Länge des Übergangsbereiches (d12, d23) von der Geschwindigkeit des mobilen Terminals (MOT) abhängig gewählt ist.

5. Datenübertragungssystem nach einem der Ansprüche 1 bis 4, **dadurch gekennzeichnet, dass** jede Sende/Empfangseinheit (RFA, RFB) eine eigene Antenne besitzt.

6. Datenübertragungssystem nach einem der Ansprüche 1 bis 5, **dadurch gekennzeichnet, dass** der Leckwellenleiter (LWL) an seinen beiden Enden mit Abschlusswiderständen (Z) im wesentlichen reflexionsfrei abgeschlossen ist.

7. Datenübertragungssystem nach einem der Ansprüche 1 bis 6, **dadurch gekennzeichnet, dass** das verwendete Funksystem ein Bluetooth-System ist.
